# EUROPEAN PATENT SPECIFICATION

(11) **EP 1 939 683 B1**
(45) Date of publication and mention of the grant of the patent: **11.11.2009**
(21) Application number: 07116125.1
(22) Date of filing: 11.09.2007
(51) Int. Cl.: G03B 17/00, G11B 31/00, H04N 5/225

(54) **Image photographing apparatus**
Bildfotografiervorrichtung
Appareil de photographie d'images

(30) Priority: 28.12.2006 KR 20060136988
(43) Date of publication of application: 02.07.2008
(73) Proprietor: Samsung Electronics Co., Ltd., Suwon-si, Gyeonggi-do (KR)
(72) Inventor: Kim, Byoeng-su, 9-302, Hyundai Apartment, Gyeonggi-do (KR); Chung, Yeon-moo, 119-1302, Samsung Raemian Wolgok, Seongbuk-gu, Seoul (KR)
(74) Representative: Grünecker, Kinkeldey, Stockmair & Schwanhäusser Anwaltssozietät

(56) References cited:
- EP-A- 1 699 230
- US-A- 5 946 512
- US-A1- 2004 051 811
- US-A1- 2004 169 955
- US-A1- 2006 062 880

## Description

### BACKGROUND OF THE INVENTION

### 1. Field of the Invention

The present invention relates to an image photographing apparatus, such as a camcorder, a motion image camera, a still camera, or the like.

### 2. Description of the Related Art

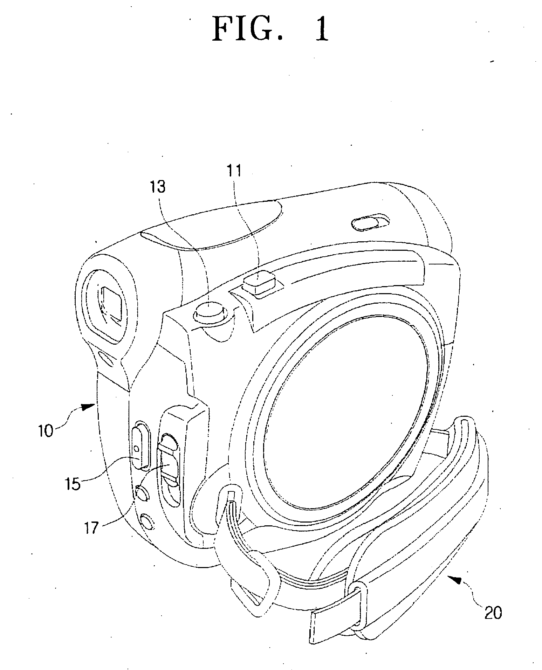

As illustrated in FIG. 1, a conventional image photographing apparatus has a main body 10 and a hand grip 20 fixed and placed to one side surface of the main body 10 in a form capable of wrapping the back of a user's hand to allow the user to easily grip the image photographing apparatus in a photographing operation. The main body 10 includes a zoom button 11 for activating a T/W zoom function and a still image button 13 for photographing a still image on an upper surface thereof. Additionally, the main body 10 includes a motion image button 15 for photographing a motion image and a power switch 17 on a rear surface thereof.

In a high angle photographing operation, the conventional image photographing apparatus as described above is grasped by inserting the user's hand into the hand grip 20 in the form that the back of the user's hand is wrapped therein and then grips the main body 10. Accordingly, user's fingers are in contact with the zoom button 11, still image button 13, and motion image button 15, and thus it is easy to manipulate buttons. To take a comfortable posture while changing into a low angle photographing operation from the high angle photographing operation, the user should remove the user's hand from the hand grip 20 and then again grasp the hand grip 20. Furthermore, to change into the high angle photographing operation from the low angle photographing operation, the user should also remove the user's hand from the hand grip 20 and then again grasp the hand grip 20. Accordingly, a problem may occur in that when the user changes the photographing angle of the image photographing apparatus, it is difficult to continuously photograph. Also, a problem may arise in that, since user's fingers, particularly the forefinger and middle finger, are in contact with a front surface of the main body 10 when changing into a low angle photographing operation from the high angle photographing operation, it is impossible to manipulate the zoom button 11, still image button 13, and motion image button 15 which are placed on the upper and rear surfaces of the main body 10. Additionally, when the buttons are manipulated using the thumb, it is difficult to grip the main body 10 stably.

Examples of conventional image photographing apparatuses are disclosed in : EP 1 699 230 A1, US 2005/0062880 A1, US 2004/005 1811 A1, US 2004/005 1811, US 5 946 512 A.

### SUMMARY OF THE INVENTION

The present invention provides an image photographing apparatus, as defined in independent claim 1, which allows a user to photograph freely while changing a position of the user's hand according a photographing angle that the user wants to use while grasping or gripping the apparatus.

Additional aspects and utilities of the present invention will be set forth in part in the description which follows and, in part, will be obvious from the description, or may be learned by practice. .

The foregoing and/or other aspects and utilities of the present invention may be achieved by providing an image photographing apparatus including a main body, a first button manipulation unit placed on the main body to be used in a high angle photographing operation, and a second button manipulation unit placed on the main body to be used in a low angle photographing operation.

The first button manipulation unit may be placed on at least one of an upper surface and a rear surface of the main body.

The first button manipulation unit may include a first zoom button to activate a zoom function, a first still image button to photograph a still image, and a first motion image button to photograph a motion image.

The first zoom button and first still image button may be adjacent to each other on the upper surface of the main body.

The first motion image button may be placed on the rear surface of the main body.

The second button manipulation unit may be placed on a front surface of the main body.

The second button manipulation unit may include a second zoom button to activate a zoom function, and a still/motion image button to photograph by selectively switching between a still image and a motion image.

The second button manipulation unit may include a second zoom button to activate a zoom function, a second still image button to photograph a still image, and a second motion image button to photograph a motion image.

The image photographing apparatus may further include a gripping unit placed on the main body.

The gripping unit may be rotatably placed on the main body.

The gripping unit may include a rotary plate rotatably placed on a side surface of the main body, and a gripping band coupled to the rotary plate.

### BRIEF DESCRIPTION OF THE DRAWINGS

These and/or other aspects and utilities of the present invention will become apparent and more readily appreciated from the following description of the embodiments, taken in conjunction with the accompanying drawings of which:

FIG. 1 is a perspective view illustrating a general image photographing apparatus;

FIGS. 2A and 2B are perspective views illustrating an image photographing apparatus according to an exemplary embodiment of the present invention;

FIG. 3 is a perspective view illustrating an image photographing apparatus according to another exemplary embodiment of the present invention; and

FIGS. 4A and 4B are views illustrating user's motions according to photographing angles of the image photographing apparatus according to an exemplary embodiment of the present invention, respectively.

### DETAILED DESCRIPTION OF THE PREFERRED EMBODIMENTS

Reference will now be made in detail to the embodiments of the present invention examples of which are illustrated in the accompanying drawings, wherein like reference numerals refer to the like elements throughout. The embodiments are described below in order to explain the present general inventive concept by referring to the figures.

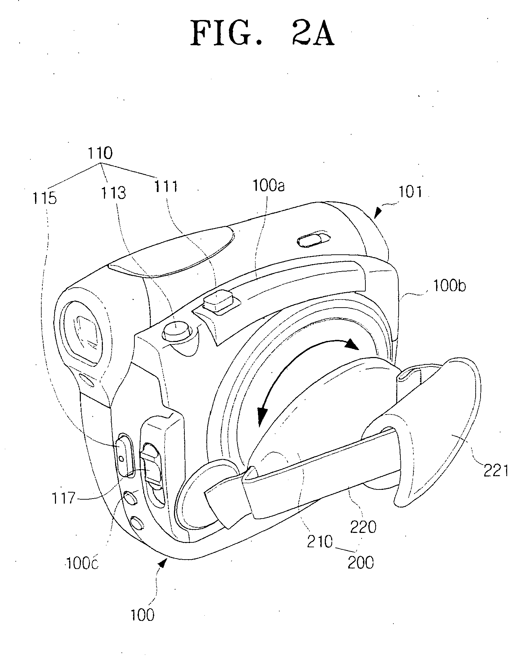

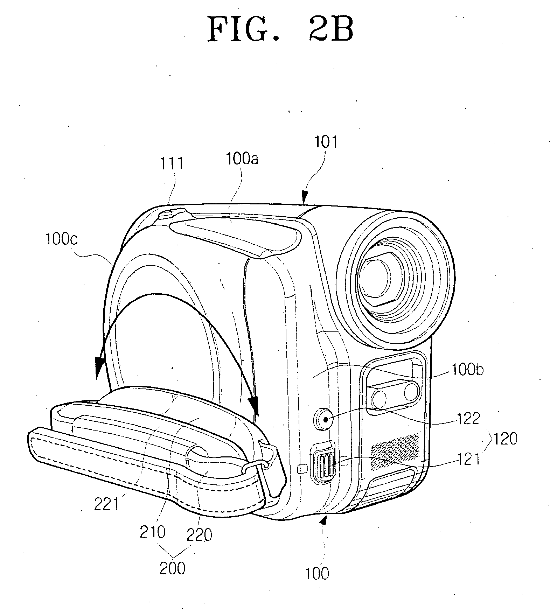

FIGS. 2A and 2B are perspective views illustrating an image photographing apparatus according to an exemplary embodiment of the present invention.

As illustrated in FIGS. 2A and 2B, the image photographing apparatus according to this exemplary embodiment may include a main body 100, and a griping unit 200 placed on the main body 100.

The main body 100 can be equipped with a camcorder, a motion image camera, and/or a still camera, which are known in the art. The main body 100 may include a first button manipulation unit 110 used in a high angle photographing operation, a second button manipulation unit 120 used in a low angle photographing operation, and a power switch 117.

The first button manipulation unit 110 can be placed on an upper surface 100a and/or a rear surface 100c of the main body 100. The first button manipulation unit 110 may include a first zoom button 111 to activate a T/W zoom function, a first still image button 113 to photograph a still image, and a first motion image button 115 to photograph a motion image. The fist zoom button 111 and first still image button 113 may be adjacent to each other on the upper surface 110a of the main body 100, and the first motion image button 115 may be placed on the rear surface 110c of the main body 100.

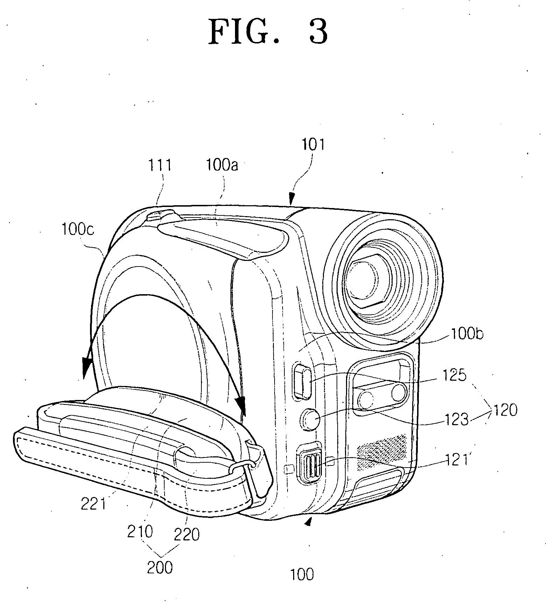

The second button manipulation unit 120 can be placed on a front surface 100b of the main body 100. The front surface 100b may be disposed opposite to the rear surface 100c or facing an object to be photographed. The second button manipulation unit 120 may include a second zoom button 121 to activate the TAN zoom function, and a still/motion image button 122 to photograph by selectively switching between a still image and a motion image. The still/motion image button 122 may be used as a still image button or a motion image button according to a photographing mode of the image photographing apparatus. For example, if the image photographing apparatus is in a still image photographing mode, the still/motion image button 122 may act as a still image button, and if the image photographing apparatus is in a motion image photographing mode, the still/motion image button 122 may act as a motion image button. Alternatively, as illustrated in FIG. 3, in an image photographing apparatus according to another exemplary embodiment of the present invention, a second button manipulation unit 120 may include a second zoom button 121 to activate the T/W zoom function, a second still image button 123 to photograph a still image, and a second motion image button 125 to photograph a motion image.

The gripping unit 200 may be rotatably placed on the main body 100. The gripping unit 200 may include a rotary plate 210 and a gripping band 220.

The rotary plate 210 is rotatably placed on one side surface of the main body 100. The rotary plate 210 can be placed at a rotary axle (not illustrated), which is an axle that is coupled with the main body 100. The rotary axle can have a gear structure (not illustrated), so that the rotary plate 210 is rotated in intervals of a predetermined angle with respect to the main body 100. The rotary plate 210 can have a thin disk shape. However, the rotary plate 210 according to embodiments of the present general inventive concept is not limited to this shape, but can be formed in other shapes, such as a polygonal plate or the like. For example, the rotary plate 210 may be a conventional structure rotatably coupled to a body to rotate with respect to the body by an angle.

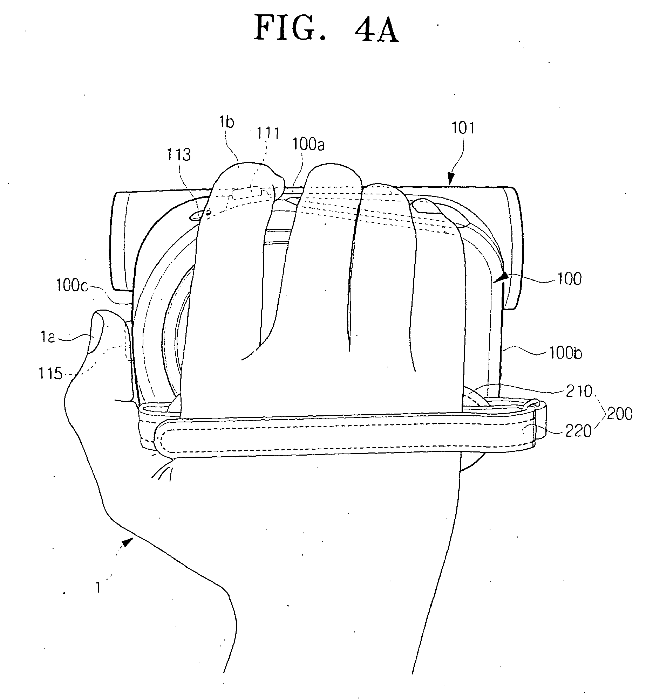

The gripping band 220 can be coupled with the rotary plate 210. The gripping band 220 can adjust a length thereof, so that a user's hand 1 can be securely seated on the main body 100, as illustrated in FIG. 4A. Also, the gripping band 220 may include a subsidiary member 221 to wrap across the back of the user's hand.

An image photographing apparatus to photograph a still image and a motion image, according to another exemplary embodiment of the present invention may include a main body 100, a camera unit 101 mounted in the main body 100 to photograph a subject, and a gripping unit 200 rotatably placed on one side surface of the main body 100. The main body 100 may include first and second still image buttons 113 and 123 to photograph a still image, first and second motion image buttons 115 and 125 to photograph a motion image, and first and second zoom buttons 111 and 121 to zoom the subject in or out.

An image photographing apparatus according to still another exemplary embodiment of the present invention may include a main body 100, and a camera unit 101, mounted in the main body 100, to photograph a subject. The main body 100 includes first and second image button to photograph an image, and first and second zoom buttons 111 and 121 to zoom the subject in or out. The first image button can be placed on a rear surface 100c of the main body 100, and the second image button can be placed on a front surface 100b of the main body 100.

In the image photographing apparatus according to the exemplary embodiment of the present invention constructed as described above, the first button manipulation unit 110 used in a high angle photographing operation, and the second button manipulation unit 120 used in a low angle photographing operation are placed at appropriate positions of the main body 100. Accordingly, it is easy to manipulate the buttons according to the change of the photographing angle between the high angle and low angle.

Specifically, as illustrated in FIG. 4A, in a high angle photographing operation, the main body 100 can be gripped by inserting the user's hand 1 in the gripping band 220 and then adjusting the length of the gripping band 220 according to the size of the user's hand 1. At this time, since user's fingers are in contact with the first button manipulation unit 110, the first zoom button 111 or the first still image button 113 on the upper surface 100a of the main body 100 can be manipulated using the forefinger 1b. In addition, the first motion image button 117 on the rear surface 100c of the main body 100 can be manipulated using the thumb 1a.

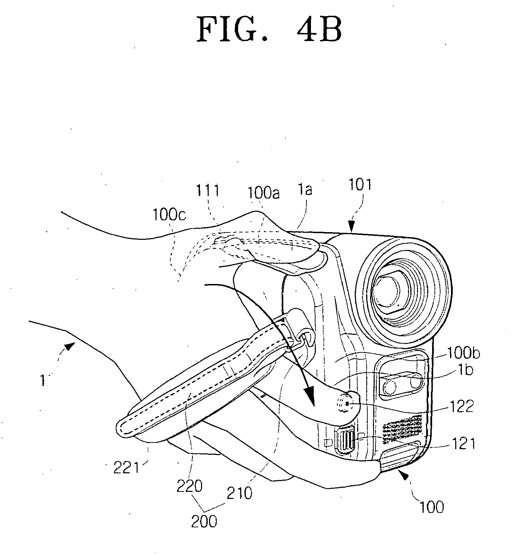

As illustrated in FIG. 4B, when a photographing posture is changed to a low angle photographing operation from the high angle photographing operation, a user can rotate the gripping unit 200 with the user's hand 1 inserted in the gripping band 220. Alternatively, when the photographing posture is changed to the high angle photographing operation from the low angle photographing operation, the user can also rotate the gripping unit 200 with the user's hand 1 inserted in the gripping band 220. That is, the user can photograph while freely changing a position of the user's hand 1 according the photographing angle in which the user wants to photograph at, in a condition that a grasping or gripping state of the apparatus is held. If the photographing posture is changed to the low angle photographing operation, the user's fingers may be in contact with the second button manipulation unit 120. Accordingly, the second zoom button 121 or the still/motion image button 122 can be easily manipulated using the forefinger 1b. At this time, if the still/motion image button 122 is repeatedly pressed, a still image and a motion image can be selectively switched to be photographed.

As apparent from the foregoing description, according to the exemplary embodiments of the present invention, the first button manipulation unit used in a high angle photographing operation, and the second button manipulation unit used in a low angle photographing operation are placed at appropriate positions of the main body. Accordingly, it is easy to manipulate the buttons according to the change of the photographing angle between the high angle and low angle.

Additionally, the user can photograph freely by changing the position of the user's hand according the photographing angle that the user wants to photograph, in the condition that the gripping state to the apparatus is held.

Although a few embodiments of the present invention have been shown and described, it will be appreciated by those skilled in the art that changes may be made in these embodiments without departing from the scope of which is defined in the appended claims.

## Claims

1. An image photographing apparatus, comprising:
a main body (100);
a gripping unit (200) rotatably placed on the main body to rotate between a first grip position and a second grip position; and
a first button manipulation unit (110) for performing photographing operations;
the first button manipulation unit (110) being placed on the main body (100) at a position to correspond with the first grip position to be used in a high angle photographing operation;
**characterized by**
a second button manipulation unit (120) for performing photographing operations, placed on the main body (100) at a position to correspond with the second grip position to be used in a low angle photographing operation;
wherein a user's hand inserted in the gripping unit (200) can selectively operate one of the first and second button manipulation units (110, 120) without removing his hand from the gripping unit by rotating his hand together with the gripping unit, with respect to the main body (100).

2. The apparatus as claimed in claim 1, wherein the first button manipulation unit (110) is placed on at least one of an upper surface (100a) and a rear surface (100c) of the main body (100).

3. The apparatus as claimed in claim 2, wherein the first button manipulation unit (110) comprises:
a first zoom button (111) to activate a zoom function;
a first still image button (113) to photograph a still image; and
a first motion image button (115) to photograph a motion image.

4. The apparatus as claimed in claim 3, wherein the first zoom button and first still image button are adjacent to each other on the upper surface (100a) of the main body.

5. The apparatus as claimed in claim 4, wherein the first motion image button (115) is placed on the rear surface (100c) of the main body.

6. The apparatus as claimed in claim 2, wherein the second button manipulation unit (120) is placed on a front surface (100b) of the main body.

7. The apparatus as claimed in claim 6, wherein the second button manipulation unit (120) comprises:
a second zoom button (121) to activate a zoom function;
a second still image button (123) to photograph a still image; and
a second motion image button (125) to photograph a motion image.

8. The apparatus as claimed in claim 6, wherein the second button manipulation unit (120) comprises:
a second zoom button (121) to activate a zoom function; and
a still/motion image button (122) to photograph by selectively switching between a still image and a motion image.

9. The apparatus as claimed in claim 1, wherein the gripping unit (200) comprises:
a rotary plate (210) rotatably placed on a side surface of the main body; and
a gripping band (220) coupled to the rotary plate.

## Patentansprüche

1. Bildfotografiervorrichtung, die umfasst:
einen Hauptkörper (100);
eine Greifeinheit (200), die drehbar an dem Hauptkörper angeordnet ist und sich zwischen einer ersten Greifposition und einer zweiten Greifposition dreht; und
eine erste Knopf-Betätigungseinheit (110) zum Durchführen von Fotografiervorgängen;
wobei die erste Knopf-Betätigungseinheit (110) an dem Hauptkörper (100) an einer Position angeordnet ist, die der ersten Greifposition entspricht, die bei einem Fotografiervorgang aus hohem Winkel zu verwenden ist;
**gekennzeichnet durch**
eine zweite Knopf-Betätigungseinheit (120) zum Durchführen von Fotografiervorgängen, die an dem Hauptkörper (100) an einer Position angeordnet ist, die der zweiten Greifposition entspricht, die bei einem Fotografiervorgang aus niedrigem Winkel zu verwenden ist;
wobei eine Hand des Benutzers, die in die Greifeinheit (200) eingeführt ist, selektiv die erste oder die zweite Knopf-Betätigungseinheit (110, 120) betätigen kann, ohne die Hand aus der Greifeinheit zu entfernen, indem die Hand zusammen mit der Greifeinheit in Bezug auf den Hauptkörper (100) gedreht wird.

2. Vorrichtung nach Anspruch 1, wobei die erste Knopf-Betätigungseinheit (110) an wenigstens einer oberen Fläche (100a) oder an einer hinteren Fläche (100c) des Hauptkörpers (100) angeordnet ist.

3. Vorrichtung nach Anspruch 2, wobei die erste Knopf-Betätigungseinheit (110) umfasst:
einen ersten Zoom-Knopf (111) zum Aktivieren einer Zoom-Funktion;
einen ersten Standbild-Knopf (113) zum Fotografieren eines Standbildes; und
einen ersten Bewegtbild-Knopf (115) zum Fotografieren eines Bewegtbildes.

4. Vorrichtung nach Anspruch 3, wobei der erste Zoom-Knopf und der erste Standbild-Knopf an der Oberseite (100a) des Hauptkörpers aneinandergrenzen.

5. Vorrichtung nach Anspruch 4, wobei der erste Bewegtbild-Knopf (115) an der hinteren Fläche (100c) des Hauptkörpers angeordnet ist.

6. Vorrichtung nach Anspruch 2, wobei die zweite Knopf-Betätigungseinheit (120) an einer vorderen Fläche (100b) des Hauptkörpers angeordnet ist.

7. Vorrichtung nach Anspruch 6, wobei die zweite Knopf-Betätigungseinheit (120) umfasst:
einen zweiten Zoom-Knopf (121) zum Aktivieren einer Zoom-Funktion;
einen zweiten Standbild-Knopf (123) zum Fotografieren eines Standbildes; und
einen zweiten Bewegtbild-Knopf (125) zum Fotografieren eines Bewegtbildes.

8. Vorrichtung nach Anspruch 6, wobei die zweite Knopf-Betätigungseinheit (120) umfasst:
einen zweiten Zoom-Knopf (121) zum Aktivieren einer Zoom-Funktion; und
einen Stand-/Bewegtbild-Knopf (122) zum Fotografieren durch selektives Umschalten zwischen einem Standbild und einem Bewegtbild.

9. Vorrichtung nach Anspruch 1, wobei die Greifeinheit (200) umfasst:
eine Drehplatte (210), die drehbar an einer Seitenfläche des Hauptkörpers angeordnet ist; und
ein Greifband (220), das mit der Drehplatte verbunden ist.

## Revendications

1. Un appareil de photographie d'images, comprenant :
un corps principal (100) ;
une unité de de prise (200) placée de manière orientable sur le corps principal pour pivoter entre une première position de prise et une deuxième position de prise ; et
une première unité de manipulation par bouton (110) pour exécuter des opérations de photographie ;
la première unité de manipulation par bouton (110) placée sur le corps
principal (100) à une position correspondant à la première position de prise devant être utilisée lors d'une opération de photographie à angle haut ;
**caractérisé par**
une deuxième unité de manipulation par bouton (120) pour exécuter des opérations de photographie, placée sur le corps principal (100) à une position qui doit correspondre avec la deuxième position de prise qui doit être utilisée lors d'une opération de photographie à angle bas ;
où la main de l'utilisateur insérée dans l'unité de prise (200) peut utiliser par sélection l'une des première et deuxième unités de manipulation par
bouton (110,120) sans retirer sa main de l'unité de prise en tournant sa main avec l'unité de prise par rapport au corps principal (100).

2. L'appareil revendiqué selon la revendication 1, où la première unité de manipulation par bouton (110) est placée sur au moins une surface supérieure (100a) et une surface arrière (100c) du corps principal (100).

3. L'appareil revendiqué selon la revendication 2, où la première unité de manipulation par bouton (110) comprend :
un premier bouton de zoom (111) pour activer une fonction de zoom ;
un premier bouton d'image fixe (113) pour photographier un image fixe ; et
un premier bouton d'image dynamique (115) pour photographier une image dynamique.

4. L'appareil revendiqué selon la revendication 3, où le premier bouton de zoom et le premier bouton d'image fixe sont adjacents entre eux sur la surface supérieure (100a) du corps principal.

5. L'appareil revendiqué selon la revendication 4, où le premier bouton d'image dynamique (115) est placé sur la surface arrière (100c) du corps principal.

6. L'appareil revendiqué selon la revendication 2, où la deuxième unité de manipulation par bouton (120) est placée sur une surface de front (100b) du corps principal.

7. L'appareil revendiqué selon la revendication 6, où la deuxième unité de manipulation par bouton (120) comprend :
un deuxième bouton de zoom (121) pour activer une fonction de zoom ;
un deuxième bouton d'image fixe (123) pour photographier une image fixe ; et
un deuxième bouton d'image dynamique (125) pour photographier une image dynamique.

8. L'appareil revendiqué selon la revendication 6, où la deuxième unité de manipulation par bouton (120) comprend :
un deuxième bouton de zoom (121) pour activer une fonction de zoom ; et
un bouton d'image fixe/dynamique (122) pour photographier en commutant respectivement entre image fixe et image dynamique.

9. L'appareil revendiqué selon la revendication 1, où l'unité de prise (200) comprend :
une plaque pivotante (210) placée de manière orientable sur une surface latérale du corps principal ; et
une bande de prise (220) couplée avec la plaque pivotante.
